# EUROPEAN PATENT SPECIFICATION

(11) **EP 0 883 546 B1**
(45) Date of publication and mention of the grant of the patent: **20.10.2004**
(21) Application number: 97905671.0
(22) Date of filing: 30.01.1997
(51) Int. Cl.: B65B 9/00, B65B 51/30

(54) **SEALING APPARATUS**
SCHWEISSVORRICHTUNG
DISPOSITIF DE SOUDAGE

(30) Priority: 30.01.1996 JP 1409096; 08.07.1996 JP 17765796
(43) Date of publication of application: 16.12.1998
(73) Proprietor: Tetra Laval Holdings & Finance SA, 1009 Pully (CH)
(72) Inventor: YANO, Keiji, Yokohama City, Kanagawa 236 (JP); TEZUKA, Isao, Inba-gun, Chiba 270-14 (JP); IWASAKI, Yutaka, Yokohama City, Kanagawa 233 (JP)
(74) Representative: Rösler, Uwe, Dipl.-Phys.
(86) International application number: PCT/US1997/001473
(87) International publication number: WO 1997/028045

(56) References cited:
- EP-A- 0 484 998
- US-A- 4 067 175
- US-A- 4 512 138
- US-A- 4 630 429
- US-A- 4 757 668
- US-A- 4 848 063
- US-A- 5 067 302
- US-A- 5 284 002

## Description

This invention generally relates to a sealing apparatus and more particularly concerns an apparatus and method for sealing together plastic layers of packaging material to form a seal, as defined in claims 1, 9, 14 and 10.

US-A-4,630,429 describes an apparatus and a method for sealing a web of film in a form, fill and seal packaging system. The apparatus includes a hot bar heated to a temperature equal to the softening point of the sealable material itself. The sealing apparatus includes two jaws, one provided with a heating member and the opposite provided with a cooling member. Both jaws include opposite film-contacting surfaces for sealing. Spaced from the sealing contacts by a notch are arranged gripping members which are adapted to prevent slippage of the packaging material during sealing.

US-A-4,512,138 describes a form, fill and seal machine with hot gas and thermal impulse sealing. The apparatus includes two opposite jaws, one of the jaws beiing provided with retractable sealing tips having a sloped surface which is provided with an electric heating element. Adjacent each of the sealing tips but distant to the heating element is arranged a clamping block. The clamping block co-acts with a pad of the opposite jaw for clamping together the layers to be sealed. The sealing tip co-acts with a recess on the opposite jaw; the recess receives hot air from a channel and blown into the recess near the sloped surface of the sealing tip, consequently with no continuous front surface between the sealing location and the clamp blocks.

Packaging containers, for example those having a brick shape, for containing liquid food such as milk and soft drinks have been made through the use of packaging machines. These machines form a continuously moving web-shaped packaging material made of a flexible laminate into a tubular shape, which is then filled with the desired liquid food product. The web-shaped packaging material is manufactured with a packaging material manufacturing machine and is placed on a reel. The reel is then installed in the packaging machine where it is reeled out and routed within the packaging machine using drive mechanisms disposed in several positions in the packaging machine. The packaging material is sealed in the longitudinal direction within the packaging machine to form the tubular sha.pe. For this reason, the packaging material possesses a laminate structure made up of a paper base layer, a film coating layer on each side of the paper base layer and, if necessary, an aluminum foil layer interposed between the paper base layer and the film.

While the tubular packaging material is being transferred downward within the packaging machine, liquid food is supplied from above to fill the inside of the tubular packaging material. Next, the packaging material is squeezed from both sides and sealed in the lateral direction at specified intervals to form interconnected primary containers having the desired shape, e.g., pillow shaped, bag shaped, etc.

Next, the laterally extending sealed portions are cut, and each of the resulting primary containers is folded along previously formed crease lines to form a container having a specified shape. Thus, a plurality of packaging containers each containing a specified amount of liquid food are formed.

To seal the packaging material in the longitudinal or lateral direction, plastic films on the packaging material surfaces are positioned so as to face each other. The aluminum foil in the packaging material generates heat by a sealing apparatus such as an inductor, and pressure is applied to heat-fuse and bond together the plastic films.

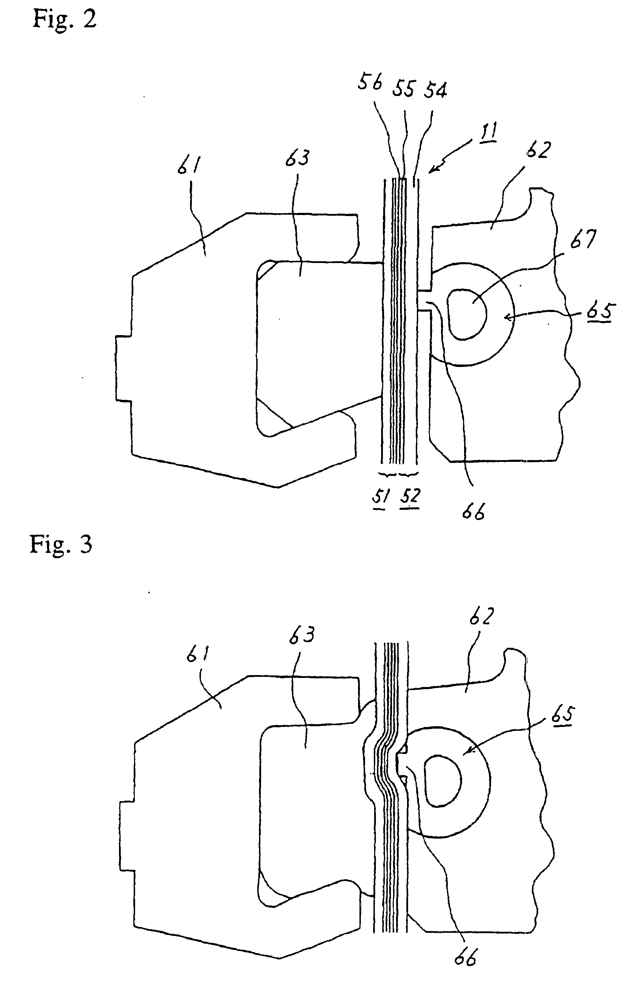

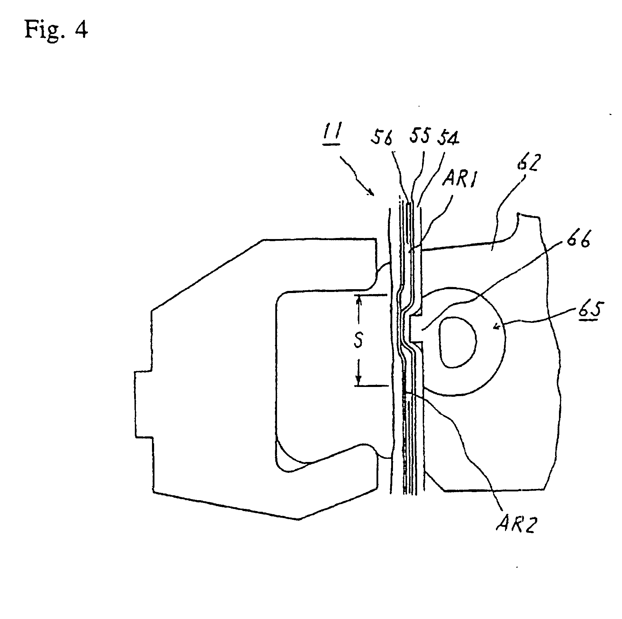

Figs. 2-4 illustrate various stages in a sealing process using a conventional sealing apparatus. As illustrated, a tubular packaging material 11 is used and web-shaped packaging materials 51, 52 are placed in face to face relation to each other in a sealing zone S. Each of the packaging materials 51, 52 is of a laminate structure made up of a paper base layer 54, an aluminum foil layer 55 located on the inside surface of the paper base layer 54, and a film layer 56 of polyethylene, for example, located on the inside surface of the aluminum foil layer 55. Although not specifically illustrated, the outside surface of the paper base layer 54 is also coated with a layer of plastic material such as polyethylene. The polyethylene portions 56 of the two packaging materials 51, 52 are bonded together by heat fusion.

The conventional machines employ a sealing apparatus to seal and cut the packaging material 11. The sealing apparatus is provided with cutting jaws and heat seal jaws (the specific details of which are not shown) disposed in opposing relation to each other. Each of the cutting jaws is provided with a pair of cutting rails 61 while each of the heat seal jaws is provided with a pair of sealing blocks 62. A cutter (not shown) is disposed in the gap formed between both cutting rails 61.

The cutting rail 61 includes a counter element 63 of rubber that extends along the cutting rail 61, while the sealing block 62 is provided with an inductor 65 disposed opposite to the counter element 63. The inductor 65 extends along the sealing block 62 and is provided with a projection 66 extending toward the cutting jaws. A coolant passage 67 is formed through the inductor 65 to control the temperature of the inductor 65 as a result of coolant flowing through the coolant passage 67.

In the initial stages of the sealing process shown in Fig. 2, the packaging material 11 is placed between the sealing block 62 and the cutting rail 61, whereupon the cutting jaw and the heat seal jaw are moved so that they approach each other. In the subsequent stage shown in Fig. 3, the cutting jaw and the heat seal jaw are moved further towards each other, and the sealing portion of the packaging material 11 is pressed hard and deformed with the inductor 65 and the counter element 63. As shown in Fig. 3, a high frequency voltage is applied with a power device (not shown) to cause the aluminum foil 55 to generate heat with induction current. As a result, paired polyethylene portions 56 of the packaging material facing each other and squeezed between the paired aluminum foils 55 are heated and the polyethylene portions 56 in the sealing zone S are fused. As a result, the packaging material 11 is bonded together by heat fusion.

With conventional sealing apparatus such as that described above, it has been found that melted polyethylene 56 flows excessively beyond the sealing zones of the packaging material 11 and ends up flowing from the sealing zone S to an area AR1 on the cutter side and to an area AR2 on the liquid food side. As a result, the amount of polyethylene 56 contributing to the heat fusion in the sealing zone S decreases and so appropriate bond strength may not be obtained. Consequently, liquid food may leak. Furthermore, it is possible that the polyethylene 56 flowing out from the sealing zone S to the area AR2 on the liquid food side will be rapidly cooled by the liquid food, will solidify, and will adhere to the inside surface of the primary container, thus possibly causing cracks in the vicinity of the sealing zone S during the forming process that is performed after filling and sealing.

If the induction heating energy is reduced in an attempt to prevent the polyethylene material 56 from excessively flowing out of the sealing area S, the polyethylene material 56 typically cannot be melted to the extent necessary and so sufficient bond strength cannot be achieved.

Generally speaking, a need exists for a sealing apparatus that is not susceptible to the same disadvantages, drawbacks and problems associated with conventional sealing apparatus such as those described above. In particular, it would be desirable to provide a sealing apparatus that is able to prevent melted plastic from flowing out beyond the sealing zone, even when the induction heating energy is increased for purposes of increasing the sealing strength. Similarly, it would be desirable to provide a sealing apparatus that makes it possible to obtain appropriate bond strength in the sealing zone and prevent cracks from being produced in the vicinity of the sealing zone.

In light of the foregoing, the sealing apparatus of the present invention according to claim 1 includes a sealing block and a cutting bar positioned in opposing relation to the sealing block. A pair of spaced apart inductors is positioned in the sealing block, with each inductor being partially exposed above the front surface of the sealing block and with each inductor being provided with a first pressing portion for pressing packaging material during a sealing operation. A pair of spaced apart counter elements is mounted in the cutting bar, with each counter element being positioned in opposing relation to one of the inductors to permit the packaging material to be held between the counter elements and the inductors. A voltage applying device applies a high frequency voltage to the inductors. At least one of the inductors or the counter elements is provided with a second pressing portion that is disposed at a position corresponding to a portion of the packaging material that is nearer to the liquid food than to the sealing zone in order to press the packaging material at the time of sealing to prevent melted plastic from flowing outwardly beyond the sealing zone towards the liquid food.

According to claim 10 the present invention provides a method for producing a sealing zone in tubular packaging material having an outermost plastic layer and an adjacent aluminum foil layer and containing liquid which involves positioning the tubular packaging material between a cutting bar and a sealing block. The sealing block includes at least one inductor embedded in the sealing bar so that a portion of the inductor being exposed at the front surface of the sealing block and provided with a first pressing portion extending towards the cutting bar. The cutting bar includes at least one counter element positioned in opposing relation to the inductor, The method further involves pressing the tubular packaging material between the cutting bar and the sealing bar to bring together opposing portions of the plastic layer and deform a portion of the tubular packaging material along a sealing zone disposed at a location corresponding to the first pressing portion, and then applying high frequency voltage to the inductor to generate heat in the aluminum foil layer and melt the adjacent plastic layer so that the opposing portions of the plastic layer of the tubular packaging material are bonded together by heat fusion in the sealing zone. Portions of the packaging material located nearer the liquid than the sealing zone are also pressed together to prevent melted plastic from flowing outwardly from the sealing zone towards the liquid.

Further details and features associated with the present invention will become more readily apparent from the detailed description set forth below considered in conjunction with the accompanying drawing figures in which like elements are designated by like reference numerals and wherein:
Fig. 1 is a cross-sectional view of a part of a sealing apparatus according to a first embodiment of the present invention;
Fig. 2 is a cross-sectional view of a portion of a conventional sealing apparatus during a first stage of the sealing process;
Fig. 3 is a cross-sectional view of a portion of a conventional sealing apparatus during a second stage of the sealing process;
Fig. 4 is a cross-sectional view of a portion of a conventional sealing apparatus during a third stage of the sealing process;
Fig. 5 is a general schematic illustration of a portion of the packaging machine in which is employed the sealing apparatus of the present invention;
Fig. 6 is a side view, partially in section, of the sealing apparatus of the present invention during use;
Fig. 7 is a general system diagram illustrating the power circuit utilized in the present invention;
Fig. 8 is a cross-sectional view of a portion of the sealing apparatus of the present invention during a first stage of the sealing process;
Fig. 9 is a cross-sectional view of a portion of the sealing apparatus of the present invention during a second stage of the sealing process;
Fig. 10 is a cross-sectional view of a portion of the sealing apparatus of the present invention during a third stage of the sealing process;
Fig. 11 is a cross-sectional view of a part of a sealing apparatus according to another embodiment of the present invention; and
Fig. 12 is a cross-sectional view of a part of a sealing apparatus according to a still further embodiment of the present invention.

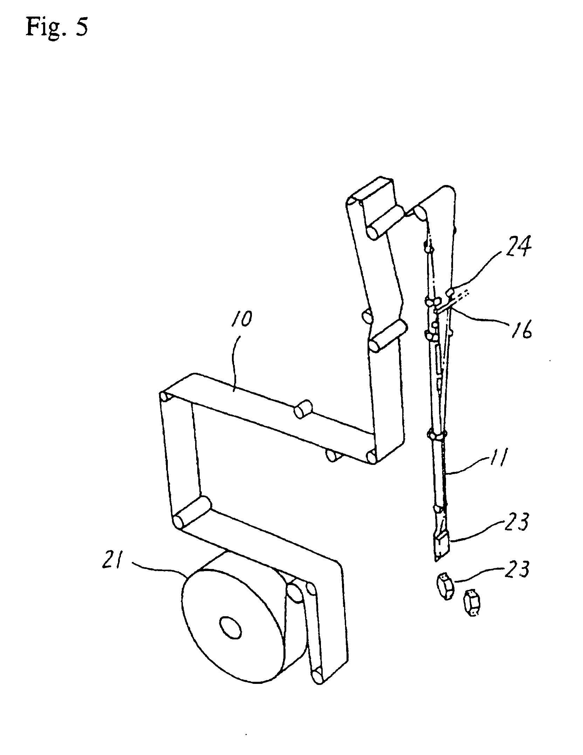

With reference initially to Fig. 5, a web-shaped packaging material 10 comprised of a flexible laminate that is manufactured with a packaging material manufacturing machine is installed as a reel 21 in a packaging machine. The packaging material 10 is reeled out and routed with various drive mechanisms (not specifically shown) that are disposed at several places in the packaging machine. The packaging material 10 is formed by laminating, for example, a polyethylene layer, an aluminum foil layer, a paper base sheet, and a polyethylene layer in that order from inside to outside.

The packaging material 10 is guided with the aid of a guide 24, sealed in the longitudinal direction with a sealing apparatus (not specifically shown) and formed into a tubular packaging material 11. While the tubular packaging material 11 is being fed downward, liquid food is supplied from above through a filler pipe 16 to fill the inside of the packaging material 11. Next, the packaging material 11 is laterally squeezed from both sides with a cutting jaw and a heat sealing jaw (both not specifically shown in Fig. 5) so that the tubular packaging material is sealed in the lateral direction at specified intervals to form pillow-shaped primary containers 23.

Next, the laterally extending sealed portions are cut to separate the individual pillow-shaped primary containers 23. The resulting primary containers 23 are folded along previously impressed crease lines to form a specified or desired shape, and are completed as one of a plurality of package containers each containing a specified amount of liquid food.

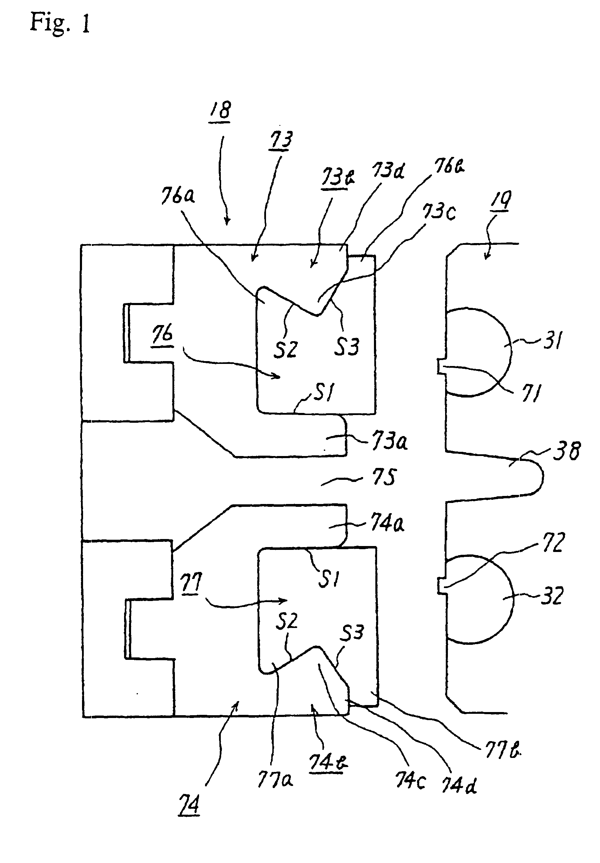

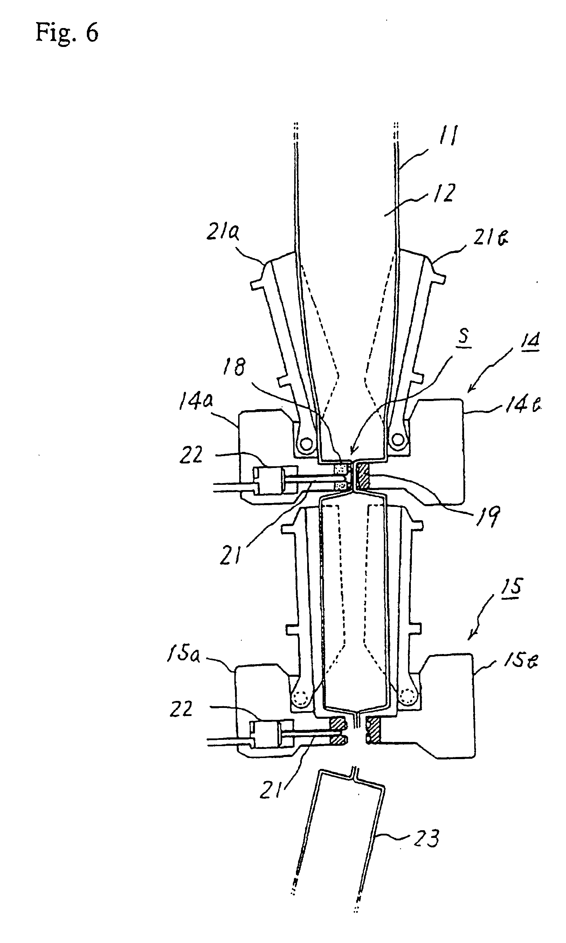

With reference to Figs. 1 and 6, the packaging material 11 is continuously fed downward and squeezed with two seal-cutting units 14, 15 at specified intervals so that opposing portions of the plastic layer are brought together and sealed in the lateral direction to form a band-like sealing zone S. The sealing zone S is then cut apart to form a primary container 23 containing a specified amount of liquid food 12. For this purpose, the seal-cutting units 14, 15 are provided with cutting jaws 14a, 15a and heat sealing jaws 14b, 15b, respectively.

To increase the processing speed of the sealing apparatus, two sets of the seal-cutting units 14, 15 having an identical structure are provided and are operated in turns with their process timings staggered by a half cycle from each other.

A cutting bar 18 is provided at the fore-end of each of the cutting jaws 14a, 15a. A sealing block or inductor insulator 19 is provided at the fore-end of each of the heat-seal jaws 14b, 15b. The cutting jaws 14a, 15a and the heat-seal jaws 14b, 15b are moved towards the packaging material with the cutting bars 18 and the sealing blocks 19 to squeeze the packaging material 11 from both sides and thus bring the opposing plastic surfaces of the packaging material in contact with each other to seal them in the lateral direction.

In the center of each of the cutting jaws 14a, 15a is a laterally arranged flat-shaped cutter 21 that is adapted to be extended or retracted as required. The cutter 21 is arranged, when extended, to cut in the center or intermediate portion of the sealing zone S. To effect the necessary movement of the cutter 21 between the extended and retracted positions, a cylinder 22 is provided at the rear end of the cutter 21. The cutter 21 may be extended or retracted by supplying or discharging working medium to or from the cylinder 22.

Paired flaps 21a, 21b are also provided on either side of the tubular packaging material and are designed to pivot for free swinging movement relative to the cutting jaws 14a, 15a and the heat sealing jaws 14b, 15b. The flaps 21a, 21b are adapted to surround, guide, and form the packaging material 11 into a generally rectangular shape.

In Fig. 6, the seal-cutting unit 14 is in the seal-cutting start position where the cutting jaw 14a and the heat sealing jaw 14b are moved towards the packaging material 11 to squeeze it from both sides and bring the opposing surfaces of the packaging material 11 into contact with each other. As the seal-cutting unit 14 moves downward, while squeezing and holding the packaging material 11, the sealing zone S is bonded and formed.

The seal-cutting unit 15 shown in Fig. 6 is in the seal-cutting end position where the cutter 21 of the seal-cutting unit moves toward the sealing zone S to cut the center or intermediate portion of the sealing zone S and separate the primary container 23 from the packaging material 11. Once the center of the sealing zone S is cut, the cutting jaw 15a and the heat sealing jaw 15b of the seal-cutting unit 15 are retracted, rotated and raised to the seal-cutting start position. When the seal-cutting unit 15 moves to the seal-cutting start position, and the cutting jaw 15a and the heat sealing jaw 15b are moved towards the sealing zone S, the cutter 21 of the seal-cutting unit 14 moves towards the sealing zone S to effect a cut at the center or intermediate portion of the sealing zone S, thereby separating the primary container 23 from the packaging material 11.

Although not specifically illustrated, the seal-cutting units 14, 15 are provided with cylinder mechanisms arranged to draw together the cutting jaw 14a (or 15a) and the heat sealing jaw 14b (or 15b) to impart the necessary pressing force at the time of sealing. The pressing force between the cutting jaw 14a (or 15a) and the heat sealing jaw 14b (or 15b) is removed in a short period of time and the seal-cutting units 14, 15 reach the seal-cutting end position.

Fig. 1 illustrates various the features associated with the cutting bar 18 and the sealing block 19. A pair of inductors or inductor bodies 31, 32 are embedded in the sealing block 19 so that a part of each of the inductors 31, 32 is exposed on the end surface of the sealing block 19. Each of the inductors 31, 32 is connected to a power source through a connecting part.

A groove 38 is formed in the sealing block 19 and is located between the two inductors 31, 32. This groove 38 extends along the sealing block 19 and is designed to accommodate the fore-end of the cutter 21 when it is extended.

Each of the inductors 31, 32 is respectively formed with a raised portion 71, 72 that forms a first pressing portion. The raised portions 71, 72 extend towards the cutting bar 18 and are disposed in the longitudinal direction of the inductors 31, 32.

The cutting bar 18 is provided with paired cutting rails 73, 74. The cutter 21 is adapted to move within a gap 75 defined between the cutting rails 73, 74.

Each of the cutting rails 73, 74 is provided with a counter element 76, 77 that extends along the cutting rails 73, 74. Each counter element 76, 77 is mounted in a groove in the respective cutting rail 73, 74. The sealing zone S of the tubular packaging material 11 is pressed hard with the counter elements 76, 77. For this reason, the counter elements 76, 77 are made of a rubber material having a Shore Hardness of about 95. In addition, each of the counter elements 76, 77 has a front surface that faces the sealing block 19. As depicted in Fig. 1, the front surface of each of the counter elements is flat or planar.

Each of the cutting rails 73, 74 is also provided with first holding portions 73a, 74a and second holding portions 73b, 74b for holding the counter elements 76, 77 in place. Each of the first holding portions 73a, 74a has a surface S1 extending towards the sealing block 19. The surface S1 is generally perpendicular to the front surface of the sealing block 19. Each of the second holding portions 73b, 74b has oblique surfaces S2, S3 that form projections 73c, 74c. Each of projections 73c, 74c is oriented in the direction towards the cutter 21.

Each of the counter elements 76, 77 has a respective engage-stop portion 76a, 77a generally in the form of a projection. The counter elements 76, 77 are secured inside the respective cutting rails 73, 74 by the interengagement of the engage-stop portions 76a, 77a and the respective projections 73c, 74c.

The counter elements 76, 77 are also provided with respective extensions 76b, 77b that form second pressing portions. These extensions 76b, 77b extend along the front surface of the respective cutting rail 73, 74. Also, the extensions 76b, 77b extend from the sealing zone S of the packaging material 11 towards the liquid food 12 to press the portions of the packaging material 11 which are nearer to the liquid food 12 than to the sealing zone S.

To prevent the extensions 76b, 77b from deflecting when the counter elements 76, 77 are pressed against the packaging material 11 and to thereby prevent the pressing force from decreasing as a result of such deflection, each of the cutting rails 73, 74 is provided with a respective holding portion 73d, 74d extending along the extensions 76b, 77b.

By virtue of this construction, when the opposing plastic or polyethylene portions of the packaging material are melted and pressed together by the raised portions 71, 72, the melted plastic or polyethylene does not flow out towards the liquid food 12 side beyond the sealing zone S because the extensions 76b, 77b press the portions of the packaging material 11 which are nearer to the liquid food 12 than to the sealing zone S. As a result, the amount of plastic or polyethylene contributing to heat fusion in the sealing zone S is ensured. Thus, the appropriate and necessary bond strength is obtained. At the same time, the liquid food 12 is prevented from leaking. In addition, cracks are prevented from appearing in the vicinity of the sealing zone S in the forming process after filling and sealing.

A further advantageous result of the construction of the sealing apparatus of the present invention is that since the extensions 76b, 77b press together the portions of the packaging material 11 which are nearer to the liquid food 12 than to the sealing zone S, the liquid food 12 is prevented from remaining within the sealing zone S. Therefore, the liquid food 12 is prevented from mixing with the melted plastic or polyethylene. Consequently, the bond strength of the seal is not detrimentally reduced. Moreover, although a small amount of plastic or polyethylene may flow from the sealing zone S of the packaging material 11 towards the cutter 21, this melted plastic or polyethylene is not cooled with the liquid food 12 and so cracks are not liable to result.

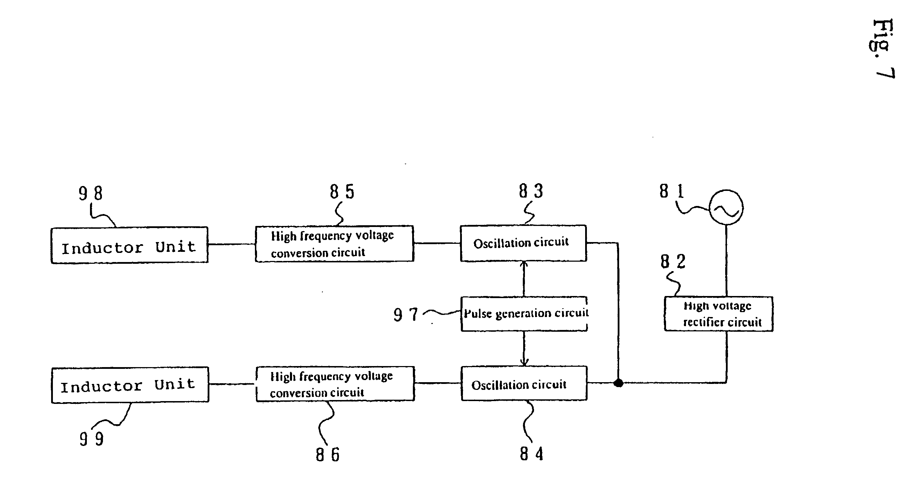

The inductors 31, 32 are connected to a power circuit or voltage applying device so that a high frequency voltage generated by the power circuit is applied to the inductors 31, 32. Fig. 7 sets forth a schematic illustration of the power circuit. An AC power source 81 generates three phase AC power, and a high voltage rectifier circuit 82 converts AC voltage generated by the AC power source 81 into DC voltage.

The DC voltage generated with the high voltage rectifier circuit 82 is applied to a pair of oscillation circuits 83, 84 which generate high frequency pulses. The oscillation circuits 83, 84 are connected to a pulse generation circuit 97 which receives pulses of a specified frequency. Each of the oscillation circuits 83, 84 is also connected to a respective high frequency voltage conversion circuit 85, 86 to generate high frequency voltages that are then applied to respective inductor units 98, 99. In this case, the inductor units 98, 99 shown in Fig. 7 are disposed to correspond to the seal-cutting units 14, 15 depicted in Fig. 6, and comprise the inductors 31, 32 illustrated in Fig. 1, respectively.

When the high frequency voltage generated with the high frequency voltage conversion circuits 85, 86 is applied to the inductors 31, 32, an electric field which changes according to the high frequency voltage is formed between the inductors 31, 32 and the aluminum foil in the packaging material. As a result, an eddy current is produced in the aluminum foil which generates heat by eddy current loss.

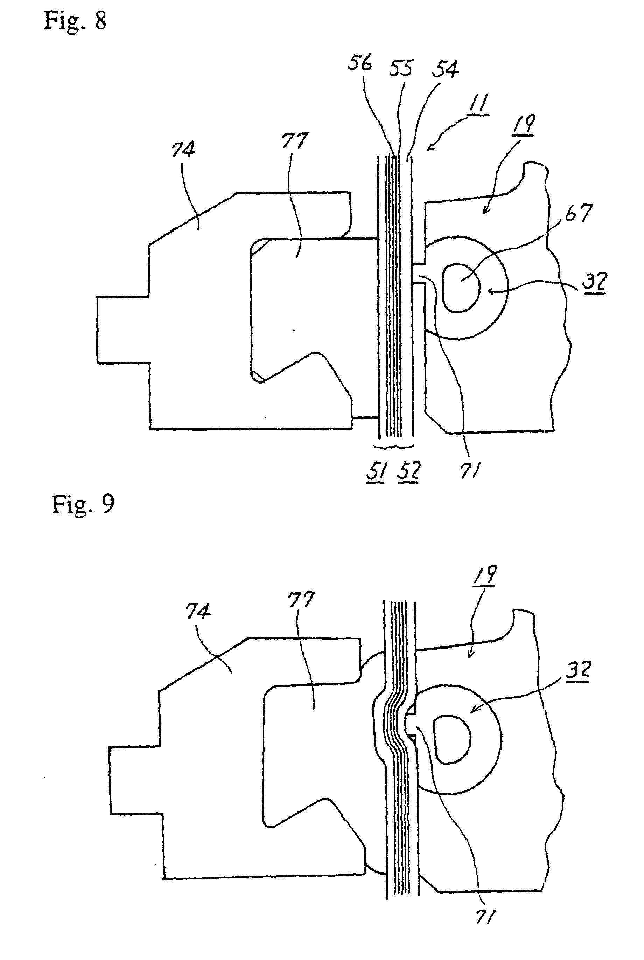

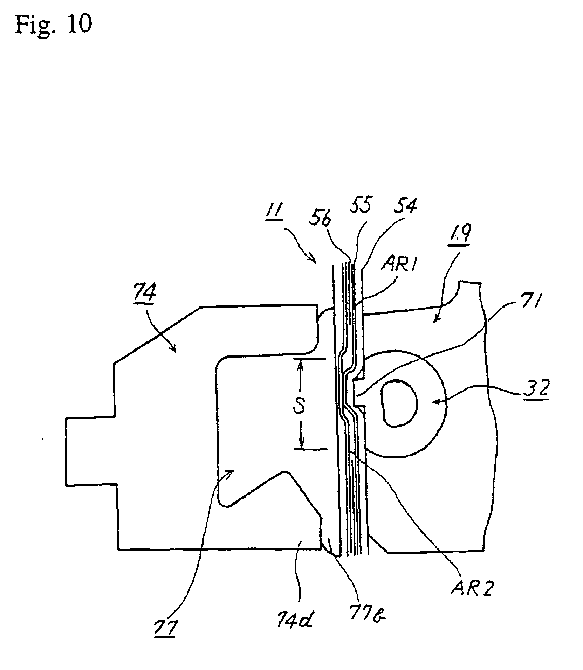

The operation of the sealing apparatus of the present invention is described below with reference to Figs. 8-10, where Fig. 8 illustrates the sealing apparatus during a first stage of the sealing operation, Fig. 9 shows the sealing apparatus during a second stage of the sealing operation, and Fig. 10 depicts the sealing apparatus during a third stage of the sealing operation.

Figs. 8-10 show the tubular packaging material 11 in general, and also illustrate the web-shaped packaging materials 51, 52 that face each other in the sealing zone S. Each of the packaging materials 51, 52 is of a laminate structure comprising a paper base layer 54, an aluminum foil layer 55 positioned on the inside surface of the paper base layer 54, and a plastic film or layer 56, for example polyethylene, positioned on the inside surface of the aluminum foil layer 55. The outside surface of the paper base layer 54 is also coated with a plastic layer or film, for example polyethylene, although this layer is not specifically illustrated in order to avoid excessive details in the drawing figures. The plastic or polyethylene portions 56 of the packaging materials 51, 52 are intended to be bonded together by heat fusion.

A sealing apparatus is disposed to seal and cut the packaging material 11. The sealing apparatus is provided with cutting jaws 14a, 15a and heat sealing jaws 14b, 15b that are disposed in opposing relation to one another as shown in Fig. 6. A cutting rail 74 is also disposed at the cutting jaws 14a, 15a and a sealing block 19 is disposed at the heat sealing jaws 14b, 15b.

The cutting rail 74 is provided with a counter element 77 extending along the cutting rail 74 and the sealing block 19 includes an inductor 32 positioned in opposing relation to the counter element 77. A coolant flow passage 67 is provided in the inductor 32 for providing coolant flow through the inductor. Fig. 10 also illustrates the holding section 74d on the cutting rail 74.

In the first stage of the sealing operation shown in Fig. 8, the packaging material 11 is placed between the sealing block 19 and the cutting rail 74. The cutting jaws 14a, 15a and the heat sealing jaws 14b, 15b are then moved towards each other.

In the second stage of the sealing process shown in Fig. 9, the cutting jaws 14a, 15a and the heat seal jaws 14a, 15b further move towards one another. This causes the sealing zone S of the packaging material 11 to be pressed hard and deformed with the inductor 32 and the counter element 77.

In the third stage of the sealing operation shown in Fig. 10, a high frequency voltage is applied from the high frequency voltage conversion circuit 86 shown in Fig. 7 to the inductor 32 to cause the aluminum foil 55 to generate heat with induction current. As a result, the pair of plastic or polyethylene portions 56 sandwiched between the pair of aluminum foils 55 are heated. As shown in Fig. 10, the packaging material 11 is thus bonded by heat fusion in the sealing zone S.

During the sealing operation, the plastic or polyethylene portions 56 facing each other are melted and pressed with the raised portion 71. This would normally cause the melted plastic or polyethylene 56 to flow outwardly beyond the sealing zone S. However, since the extensions 76b, 77b press together the portions AR2 of the packaging material 11 which are nearer to the liquid food 12 than to the sealing zone S, the melted plastic or polyethylene 56 is prevented from flowing outwardly from within the sealing zone S towards the liquid food 12. The area AR1 in Fig. 10 denotes the area which is nearer to the cutter 21 than to the sealing zone S.

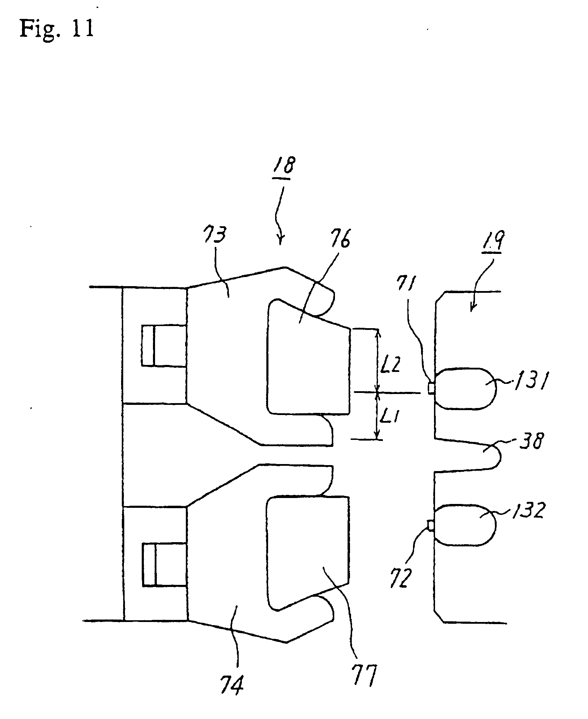

A second embodiment of the sealing apparatus of the present invention is shown in Fig. 11. In this embodiment, the inductors 131, 132 have an elliptic or generally elliptical cross-sectional shape, and are disposed nearer to the cutter 21 than to the outer edge of the counter elements 76, 77. As a result, the respective distances L1 between each raised portion 71, 72 and the groove 38 as measured along the front surface of the sealing block is shorter than the respective distance L2 between each raised portion 71, 72 and the outermost edge of the respective counter element 76, 77 as measured along the front surface of the sealing block.

As a result, the portions of the counter elements 76, 77 between the raised portions 71, 72 (i.e., the place where the raised portions 71, 72 contact the respective counter elements 76, 77) and the outermost edges of the counter elements 76, 77 function as second pressing portions which press the portions of the packaging material 11 that are nearer to the liquid food 12 than to the sealing zone S. As a result, melted plastic or polyethylene 56 does not flow out beyond the sealing zone S towards the liquid food 12.

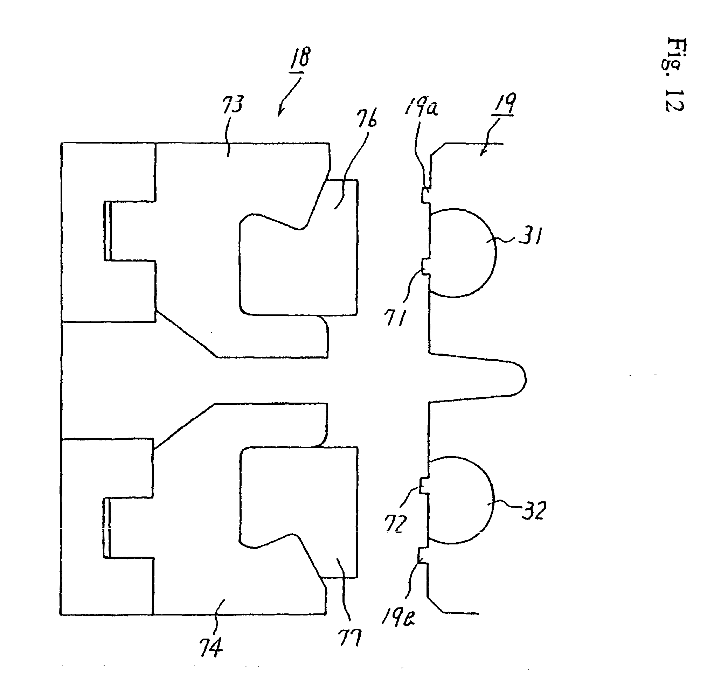

According to a third embodiment of the invention shown in Fig. 12, the sealing apparatus is designed so that the surfaces of the sealing block 19 that face the counter elements 76, 77 are each formed with a raised portion 19a, 19b disposed parallel to the inductors 31, 32. These raised portions 19a, 19b serve as the second pressing portions. When the cutting bar 18 and the sealing block 19 are moved so as to approach one another, the raised portions 19a, 19b press the portions of the packaging material 11 that are located nearer to the liquid food 12 than to the sealing zone S. As a result, melted plastic or polyethylene 56 does not flow out beyond the sealing zone S toward the liquid food 12.

The sealing apparatus according to the present invention as described above includes the combination of the sealing block, the inductors embedded in the sealing block to expose a portion of each inductor at the sealing block surface and provided with a first pressing portion for pressing the packaging material at the time of sealing, the counter elements that squeeze the packaging material, and the voltage applying device that applies a high frequency voltage to the inductors. When the high frequency voltage is applied from the voltage applying device to the inductors, induction current causes the aluminum foil of the packaging material to generate heat. As a result, the plastic material coating the packaging material is heated and bonded by heat fusion in the sealing zone S.

At least one of the inductors and counter elements is advantageously provided with the second pressing portion for pressing the packaging material which is nearer to the liquid food than to the sealing zone S. Thus, even if the plastic portions of the packaging material facing each other are melted and pressed with the first pressing portion, the plastic is prevented from flowing out beyond the sealing zone towards the liquid food because the second pressing portion presses the portion of the packaging material which is nearer to the liquid food than to the sealing zone. Consequently, melted plastic does not flow out beyond the sealing zone. This is so even if the induction heating energy is increased for purposes of increasing the sealing strength. Since the melted plastic is prevented from flowing outwardly in this regard, the appropriate bond strength can be obtained in the sealing zone, and cracks are prevented from appearing in the vicinity of the sealing zone.

In addition, the amount of plastic contributing to heat fusion in the sealing zone is maintained and so the bond strength in the sealing zone is not undesirably lowered. The bond strength is maintained even if a higher bond temperature is used by increasing the high frequency voltage supplied from the voltage applying device or a greater force is used to squeeze the packaging material. As a result, high speed processing is possible by shortening the operation cycle of the sealing apparatus.

The principles, preferred embodiments and modes of operation of the present invention have been described in the foregoing specification. However, the invention which is intended to be protected is not to be construed as limited to the particular embodiments described. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the scope of the present invention as defined in the claims be embraced thereby.

## Claims

1. A sealing apparatus (14, 15) for producing a sealing zone (S) in packaging material (10, 11) having a plastic layer (56) and containing liquid food, comprising:
a cutting bar (18);
a sealing block (19) having a front surface;
at least one inductor (31, 32) embedded in said sealing block (19), said inductor being partially exposed at the front surface of said sealing block, said inductor being provided with a first pressing portion (71, 72) raising from said exposed part of said indicator (31, 32) for pressing packaging material (10, 11) during a sealing operation;
a voltage applying means (81, 82) for applying a high frequency voltage to said inductor (31, 32);
a counter element (76, 77) disposed in opposing relation to said inductor (31, 32) with said counter element (76, 77) having a front surface to permit packaging material (10, 11) to be held between said front surface of said counter element (76, 77) and said front surface of said sealing block (19);
said cutting bar (18) having a front surface that faces said front surface of said sealing block (19), said cutting bar (18) having a recess located in said front surface of said cutting bar, said recess opening to said front surface of said cutting bar (18) and receiving said counter element (76, 77); and
means for pressing the packaging material (10, 11) at the time of sealing to prevent melted plastic from flowing outwardly beyond the sealing zone towards the liquid food, said means including an extension (76b, 77b) of said counter element (76, 77) said extension (76b, 77b) possessing a surface that faces said front surface of said cutting bar (18) prior to the sealing apparatus producing the sealing zone (S), said extension (76b, 77b) of said counter element (76, 77) extending along the front surface of said cutting bar (18) and extending outwardly beyond said recess that opens to said front surface of said cutting bar (18), said means further including a projection (73b, 74b) provided in said recess and having a surface (S3) obliquely oriented away from said liquid food and supporting said extension (76b, 77b) in a direction towards said first pressing portion (71, 72) for providing a second pressing portion that is disposed at a position corresponding to a portion of the packaging material (10, 11) that is nearer to the liquid food than to the sealing zone (S).

2. A sealing apparatus according to Claim 1, wherein said cutting bar (18) includes a pair of cutting rails (73, 74), each of which being provided with a counter element (76, 77).

3. A sealing apparatus according to Claim 2, wherein each cutting rail (73, 74) includes a first holding portion (73a, 73b) and a second holding portion (73b, 74b) that hold the respective counter element (76, 77) in place on the cutting rail (73, 74).

4. A sealing apparatus according to Claim 3, wherein said second holding portion (73b, 74b) is said projection defined by a pair of obliquely oriented surfaces (S2, S3).

5. A sealing apparatus according to Claim 4, wherein each of said counter elements (76, 77) includes an engage-stop portion (76a, 77a) that engages said projection on the respective cutting rail (73, 74).

6. A sealing apparatus according to Claim 2, wherein said cutting rails (73, 74) are spaced apart and are provided on said cutting bar (18), and including a groove (38) positioned between said cutting rails (73, 74) in which moves a cutter (21) for cutting the sealing zone (S).

7. A sealing apparatus according to claim 1, wherein a first and a second inductor (31, 32) are embedded in said sealing block (19) and said cutting bar (18) including a first and a second recess for receiving a first and a second counter element (76, 77) disposed in opposite relation to each respective inductor (31, 32), each of said counter elements (76, 77) has said extension (76b, 77b) with the extension (76b) of said first counter element (76) extending in direction away from said second inductor (32) and the extension (77b) of said second counter element (77) extending away from said first inductor (31).

8. A sealing apparatus of any one of claims 1 to 7 wherein said front surface of said sealing block (19) includes a raised portion (19a, 19b) which is located parallel to said inductor (31, 32) and opposite to said extension (76b, 77b) of said counter element (76, 77).

9. A sealing apparatus for producing a sealing zone in packaging material having a plastic layer and containing liquid food, comprising:
a sealing block (19) having a front surface;
an inductor (131, 132) embedded in said sealing block (19), said inductor (131, 132) being partially exposed at the front surface of said sealing block (19), said inductor being provided with a pressing portion (71, 72) raising from said exposed part of said inductor (31, 32) for pressing packaging material during a sealing operation;
a cutting bar (18) having a groove for receiving a cutter (21) to cut said packaging material, said cutting bar (18) having a counter element (76, 77) disposed in opposing relation to said inductor (131, 132), said counter element (76, 77) having a front surface for pressing the packaging material (10, 11) against said front surface of said sealing block (19), and possesses an outermost edge;
voltage applying means (81, 82) for applying a high frequency voltage to said inductor (131, 132); and
means for pressing the packaging material (10, 11) at the time of sealing to prevent melted plastic from flowing outwardly beyond the sealing zone towards the liquid food, said means including an inductor (131, 132) having a generally elliptical cross-sectional shape with its smaller side forming the exposed part of said inductor (131, 132)
wherein a distance (L2) between the pressing portion (71, 72) of the inductor (131, 132) and the outermost edge of the counter element (76, 77) as measured along the front surface of the sealing block (19) being greater than a distance (L1) between the pressing portion (71, 72) of the inductor (131, 132) and the groove as measured along the front surface of the sealing block (19).

10. A method of producing a sealing zone (S) in tubular packaging material, comprising:
positioning tubular packaging material (10, 11) comprised of an outermost plastic layer (56) and an adjacent aluminum foil layer (55) and containing liquid between a cutting bar (18) and a sealing block (19), the sealing block (19) including at least one inductor (31, 32) embedded in the sealing block (19) with a portion of the inductor (31, 32) being exposed at a front surface of the sealing block (19), the inductor including a first pressing portion (71, 72) extending towards the cutting bar (18), the cutting bar including at least one counter element (76, 77) positioned in opposing relation to the inductor (31, 32), the cutting bar (18) having a front surface that faces the front surface of the sealing block (19), the cutting bar having at least one recess located in the front surface of the cutting bar, the at least one recess receiving the at least one counter element (76, 77), a projection (73b, 74b) is provided in said recess and having a surface (S3) obliquely oriented away from said liquid food, a portion (76b, 77b) of the counter element being located external of the at least one recess and is supported by said obliquely oriented surface (S3) and having a rear surface that faces the front surface of the cutting bar (18) prior to producing the sealing zone (S) in the tubular packaging material, said portion (76b, 77b) of the counter element having said rear surface extending beyond the recess along the front surface of the cutting bar (18) and in a direction away from a cutting zone where the packaging material is cut, the counter element having a front surface;
pressing the tubular packaging material (10, 11) between the front surface of the sealing block (19) and the front surface of the counter element (76, 77) to bring together opposing portions of the plastic layer and deform a portion of the tubular packaging material along a sealing zone disposed at a location corresponding to the first pressing portion;
applying high frequency voltage to the inductor (31, 32) to generate heat in the aluminum foil layer (55) and melt the adjacent plastic layer (56) so that the opposing portions of the plastic layer (56) of the tubular packaging material are bonded together by heat fusion in the sealing zone (S); and
pressing together portions of the packaging material (10, 11) located nearer the liquid than the sealing zone with the portion (76b, 77b) of the counter element (76, 77) having said rear surface supported by said oblique surface to induce a portion of the pressing force directed towards said first pressing portion to prevent melted plastic from flowing outwardly from the sealing zone towards the liquid.

11. A method according to Claim 10, wherein said step of pressing together portions of the packaging material (10, 11) located nearer the liquid than the sealing zone is performed during application of the high frequency voltage to the inductor (31, 32).

12. A method according to Claim 11, wherein the sealing block (19) includes a pair of spaced apart inductors (31, 32) embedded in the sealing bar and the cutting bar (18) includes a pair of counter elements (76, 77) each positioned in opposing relation to one of the inductors (31, 32), and wherein the tubular packaging material is pressed between the cutting bar (18) and the sealing bar (19) to bring together opposing portions of the plastic layer and deform the tubular packaging material (10, 11) at two spaced apart locations corresponding to the pressing portion (71, 72) of each inductor (31,32).

13. A method according to Claim 10, wherein the step of pressing together portions of the packaging material (10, 11) located nearer the liquid than the sealing zone is performed by raised second pressing portions (19a, 19b) provided on the sealing block (19).

14. A sealing apparatus (14, 15) for producing a sealing zone (S) in packaging material (10, 11) having a plastic layer (56) and containing liquid food, comprising:
a sealing block (19) having a front surface;
at least one inductor (31, 32) embedded in said sealing block (19), said inductor being partially exposed at the front surface of said sealing block, said inductor being provided with a first pressing portion (71, 72) raising from said exposed part of said inductor (31, 32) for pressing packaging material (10, 11) during a sealing operation;
a counter element (76, 77) located in opposing relation to the inductor (31, 32) and having a front surface, and means for pressing the packaging material (10, 11) at the time of sealing to prevent melted plastic from flowing outwardly beyond the sealing zone towards the liquid food, said means including a raised portion (19a, 19b) on said sealing block (19) raised with respect to said front surface, said pressing portion (71, 72) being spaced from said raised portion (19a, 19b) of said sealing block (19) with said raised portion (19a, 19b) of the sealing block (19) being spaced from the inductor and being located on an outward side of the inductor (31, 32);
wherein the front surface of the counter element being arranged for forcing the packaging material against the first pressing portion (71, 72) of the inductor (31, 32) and the raised portion (19a, 19b) of the sealing block (19), said raised portion of said sealing block being located to prevent melted plastic from flowing outwardly beyond the sealing zone (S) toward the liquid food at the time of sealing.

15. A sealing apparatus according to claim 14, wherein the inductor is a first inductor (31), further comprising a second inductor (32) located downstream of the first inductor with respect to a direction of transport of the packaging material (10, 11) between the sealing block (19) and the counter element (76, 77), the raised portion (19a) of the sealing block (19) being located upstream of said pressing portion (71) of said first inductor (31) with respect to said transport direction.

16. The sealing apparatus according to claim 15, wherein the second inductor (32) includes a pressing portion (72) and the sealing block (19) includes another raised portion (19b), the pressing portion (72) of the second inductor (32) being located upstream of said another raised portion (19b) with respect to the transport direction of the packaging material (10, 11).

17. The sealing apparatus according to claim 14, further comprising a voltage applying device (81, 82) for applying a high frequency voltage to the inductor (31, 32).

18. The sealing apparatus according to claim 14, wherein the inductor (31, 32) is located between the raised portion (19a, 19b) of the sealing block (19) and a groove (38) formed in said sealing block (19) for accommodating a cutter (21).

## Patentansprüche

1. Versiegelungsvorrichtung (14, 15) für das Herstellen eines Versiegelungsbereichs (S) bei Verpackungsmaterial (10, 11), das eine Kunststoffschicht (56) aufweist und ein flüssiges Nahrungsmittel enthält, wobei die Versiegelungsvorrichtung folgendes umfaßt:
eine Schneidstange (18),
einen Siegelblock (19) mit einer Vorderseite,
mindestens einen in den Siegelblock (19) eingebetteten Induktor (31, 32), der an der Vorderseite des Siegelblocks teilweise freiliegt und mit einem ersten Anpreßteil (71, 72) versehen ist, der sich für das Pressen von Verpackungsmaterial (10, 11) bei einem Versiegelungsvorgang von dem freiliegenden Teil des Induktors (31, 32) erhebt,
ein Spannung anlegendes Mittel (81, 82) für das Anlegen einer hochfrequenten Spannung an den Induktor (31, 32),
ein Gegenelement (76, 77), das gegenüber dem Induktor (31, 32) angeordnet ist und eine Vorderseite aufweist, damit Verpackungsmaterial (10, 11) zwischen der Vorderseite des Gegenelements (76, 77) und der Vorderseite des Siegelblocks (19) gehalten werden kann,
wobei die Schneidstange (18) eine Vorderseite besitzt, die der Vorderseite des Siegelblocks (19) zugewandt ist, und eine in seiner Vorderseite befindliche Aussparung aufweist, die sich zur Vorderseite der Schneidstange (18) hin öffnet und das Gegenelement (76, 77) aufnimmt, und
Mittel für das Pressen des Verpackungsmaterials (10, 11) zum Zeitpunkt des Versiegelns, um zu verhindern, daß geschmolzener Kunststoff über den Versiegelungsbereich hinaus nach außen zu dem flüssigen Nahrungsmittel hin fließt, wobei diese Mittel eine Verlängerung (76b, 77b) des Gegenelements (76, 77) aufweisen, die eine Oberfläche besitzt, die der Vorderseite der Schneidstange (18) zugewandt ist, bevor die Versiegelungsvorrichtung den Versiegelungsbereich (S) erzeugt, wobei sich die Verlängerung (76b, 77b) des Gegenelements (76, 77) an der Vorderseite der Schneidstange (18) entlang und über die Aussparung hinaus, die sich zur Vorderseite der Schneidstange (18) hin öffnet, nach außen erstreckt, wobei die Mittel weiterhin einen Vorsprung (73b, 74b) aufweisen, der in der Aussparung vorgesehen ist und eine Oberfläche (S3) besitzt, die schräg von dem flüssigen Nahrungsmittel weg gerichtet ist und die Verlängerung (76b, 77b) in einer Richtung zum ersten Anpreßteil (71, 72) hin abstützt, um einen zweiten Anpreßteil bereitzustellen, der in einer Position angeordnet ist, die einem Teil des Verpackungsmaterials (10, 11) entspricht, der näher an dem flüssigen Nahrungsmittel als an dem Versiegelungsbereich (S) liegt.

2. Versiegelungsvorrichtung nach Anspruch 1, bei der die Schneidstange (18) ein Paar Schneidschienen (73, 74) aufweist, von denen jede mit einem Gegenelement (76, 77) versehen ist.

3. Versiegelungsvorrichtung nach Anspruch 2, bei der jede Schneidschiene (73, 74) einen ersten Halteteil (73a, 74a) und einen zweiten Halteteil (73b, 74b) aufweist, die das jeweilige Gegenelement (76, 77) auf der Schneidschiene (73, 74) in Position halten.

4. Versiegelungsvorrichtung nach Anspruch 3, bei der es sich bei dem zweiten Halteteil (73b, 74b) um einen von einem Paar schräg gerichteter Oberflächen (S2, S3) definierten Vorsprung handelt.

5. Versiegelungsvorrichtung nach Anspruch 4, bei der jedes der Gegenelemente (76, 77) einen Eingreif-Anschlagteil (76a, 77a) aufweist, der in den Vorsprung an der jeweiligen Schneidschiene (73, 74) eingreift.

6. Versiegelungsvorrichtung nach Anspruch 2, bei der die Schneidschienen (73, 74) voneinander beabstandet auf der Schneidstange (18) vorgesehen sind und die eine zwischen den Schneidschienen (73, 74) positionierte Nut (38) aufweist, in der sich eine Schneidvorrichtung (21) für das Schneiden des Versiegelungsbereichs (S) bewegt.

7. Versiegelungsvorrichtung nach Anspruch 1, bei der ein erster und ein zweiter Induktor (31, 32) in den Siegelblock (19) eingebettet sind und die Schneidstange (18) eine erste und eine zweite Aussparung zum Aufnehmen eines ersten und eines zweiten Gegenelements (76, 77) aufweist, wobei jedes der Gegenelemente (76, 77) dem jeweiligen Induktor (31, 32) gegenüberliegt und die Verlängerung (76b, 77b) aufweist, sich die Verlängerung (76b) des ersten Gegenelements (76) in einer Richtung vom zweiten Induktor (32) und die Verlängerung (77b) des zweiten Gegenelements (77) vom ersten Induktor (31) weg erstreckt.

8. Versiegelungsvorrichtung nach einem der Ansprüche 1 bis 7, bei der die Vorderseite des Siegelblocks (19) einen erhabenen Teil (19a, 19b) aufweist, der parallel zum Induktor (31, 32) und gegenüber der Verlängerung (76b, 77b) des Gegenelements (76, 77) liegt.

9. Versiegelungsvorrichtung für das Herstellen eines Versiegelungsbereichs bei Verpackungsmaterial, das eine Kunststoffschicht aufweist und ein flüssiges Nahrungsmittel enthält, wobei die Versiegelungsvorrichtung folgendes umfaßt:
einen Siegelblock (19) mit einer Vorderseite,
einen in den Siegelblock (19) eingebetteten Induktor (131, 132), der an der Vorderseite des Siegelblocks (19) teilweise freiliegt und mit einem Anpreßteil (71, 72) versehen ist, der sich für das Pressen von Verpackungsmaterial (10, 11) bei einem Versiegelungsvorgang von dem freiliegenden Teil des Induktors (131, 132) erhebt,
eine Schneidstange (18) mit einer Nut für das Aufnehmen einer Schneidvorrichtung (21) zum Schneiden des Verpackungsmaterials, wobei die Schneidstange (18) ein gegenüber dem Induktor (131, 132) angeordnetes Gegenelement (76, 77) mit einer Vorderseite für das Pressen des Verpackungsmaterials (10, 11) gegen die Vorderseite des Siegelblocks (19) aufweist, und mit einer Außenkante,
ein Spannung anlegendes Mittel (81, 82) für das Anlegen einer hochfrequenten Spannung an den Induktor (131, 132) und
Mittel für das Pressen des Verpackungsmaterials (10, 11) zum Zeitpunkt des Versiegelns, um zu verhindern, daß geschmolzener Kunststoff über den Versiegelungsbereich hinaus nach außen zu dem flüssigen Nahrungsmittel hin fließt, wobei dieses Mittel einen Induktor (131, 132) von im Querschnitt allgemein elliptischer Form aufweist, deren Schmalseite den freiliegenden Teil des Induktors (131, 132) bildet,
wobei ein entlang der Vorderseite des Siegelblocks (19) gemessener Abstand (L2) zwischen dem Anpreßteil (71, 72) des Induktors (131, 132) und der Außenkante des Gegenelements (76, 77) größer ist als ein entlang der Vorderseite des Siegelblocks (19) gemessener Abstand (L1) zwischen dem Anpreßteil (71, 72) des Induktors (131, 132) und der Nut.

10. Verfahren zum Herstellen eines Versiegelungsbereichs (S) bei röhrenförmigem Verpackungsmaterial, das folgendes umfaßt:
Positionieren eines eine Kunststoffaußenschicht (56) und eine daran anliegende Aluminiumfolieschicht (55) umfassenden, röhrenförmigen Verpackungsmaterials (10, 11), das Flüssigkeit enthält, zwischen einer Schneidstange (18) und einem Siegelblock (19), wobei der Siegelblock (19) mindestens einen in ihn eingebetteten Induktor (31, 32) aufweist, von dem ein Teil an einer Vorderseite des Siegelblocks (19) freiliegt und der einen ersten Anpreßteil (71, 72) aufweist, der sich zur Schneidstange (18) hin erstreckt, wobei die Schneidstange (18) mindestens ein gegenüber dem Induktor (31, 32) positioniertes Gegenelement (76, 77), eine der Vorderseite des Siegelblocks (19) zugewandte Vorderseite und mindestens eine in der Vorderseite der Schneidstange liegende Aussparung aufweist, wobei die mindestens eine Aussparung das mindestens eine Gegenelement (76, 77) aufnimmt, in der Aussparung ein Vorsprung (73b, 74b) mit einer schräg von dem flüssigen Nahrungsmittel weg gerichteten Oberfläche (S3) vorgesehen ist, ein Teil (76b, 77b) des Gegenelements außerhalb der mindestens einen Aussparung liegt, von der schräg gerichteten Oberfläche (S3) abgestützt wird und eine Rückseite aufweist, die vor dem Herstellen des Versiegelungsbereichs (S) bei dem röhrenförmigen Verpackungsmaterial der Vorderseite der Schneidstange (18) zugewandt ist, wobei sich der Teil (76b, 77b) des Gegenelements mit der Rückseite an der Vorderseite der Schneidstange (18) entlang über die Aussparung hinaus in eine Richtung von einem Schneidebereich weg erstreckt, in dem das Verpackungsmaterial geschnitten wird, und das Gegenelement eine Vorderseite aufweist,
Pressen des röhrenförmigen Verpackungsmaterials (10, 11) zwischen der Vorderseite des Siegelblocks (19) und der Vorderseite des Gegenelements (76, 77), um sich gegenüberliegende Teile der Kunststoffschicht zusammenzubringen und einen Teil des röhrenförmigen Verpackungsmaterials an einem Versiegelungsbereich entlang, der an einer dem ersten Anpreßteil entsprechenden Stelle angeordnet ist, zu verformen,
Anlegen einer hochfrequenten Spannung an den Induktor (31, 32), um in der Aluminiumfolieschicht (55) Wärme zu erzeugen und die daran anliegende Kunststoffschicht (56) zu schmelzen, so daß die einander gegenüberliegenden Teile der Kunststoffschicht (56) des röhrenförmigen Verpackungsmaterials im Versiegelungsbereich (S) durch Warmschweißen miteinander verschweißt werden, und
Zusammenpressen von Teilen des Verpackungsmaterials (10, 11), die sich näher an der Flüssigkeit befinden als der Versiegelungsbereich mit dem Teil (76b, 77b) des Gegenelements (76, 77), dessen Rückseite durch die schräge Oberfläche abgestützt wird, um einen Teil der Anpreßkraft auf den ersten Anpreßteil zu induzieren und zu verhindern, daß geschmolzener Kunststoff aus dem Versiegelungsbereich heraus zur Flüssigkeit fließt.

11. Verfahren nach Anspruch 10, bei dem der Schritt des Zusammenpressens von Teilen des Verpackungsmaterials (10, 11), die sich näher an der Flüssigkeit befinden als der Versiegelungsbereich, beim Anlegen der hochfrequenten Spannung am Induktor (31, 32) ausgeführt wird.

12. Verfahren nach Anspruch 11, bei dem der Siegelblock (19) ein Paar voneinander beabstandeter, in ihn eingebetteter Induktoren (31, 32) und die Schneidstange (18) ein Paar jeweils gegenüber einem der Induktoren (31, 32) positionierter Gegenelemente (76, 77) aufweist und das röhrenförmige Verpackungsmaterial zwischen der Schneidstange (18) und dem Siegelblock (19) gepreßt wird, um sich gegenüberliegende Teile der Kunststoffschicht zusammenzubringen und das röhrenförmige Verpackungsmaterial (10, 11) an zwei voneinander beabstandeten Stellen, die dem Anpreßteil (71, 72) jedes Induktors (31, 32) entsprechen, zu verformen.

13. Verfahren nach Anspruch 10, bei dem der Schritt des Zusammenpressens von Teilen des Verpackungsmaterials (10, 11), die sich näher an der Flüssigkeit befinden als der Versiegelungsbereich, durch an dem Siegelblock (19) vorgesehene, erhabene zweite Anpreßteile (19a, 19b) ausgeführt wird.

14. Versiegelungsvorrichtung (14, 15) für das Herstellen eines Versiegelungsbereichs (S) bei Verpackungsmaterial (10, 11), das eine Kunststoffschicht (56) aufweist und ein flüssiges Nahrungsmittel enthält, wobei die Versiegelungsvorrichtung folgendes umfaßt:
einen Siegelblock (19) mit einer Vorderseite,
mindestens einen in den Siegelblock (19) eingebetteten Induktor (31, 32), der an der Vorderseite des Siegelblocks teilweise freiliegt und mit einem ersten Anpreßteil (71, 72) versehen ist, der sich für das Pressen von Verpackungsmaterial (10, 11) bei einem Versiegelungsvorgang von dem freiliegenden Teil des Induktors (31, 32) erhebt,
ein Gegenelement (76, 77), das gegenüber dem Induktor (31, 32) angeordnet ist und eine Vorderseite aufweist, und Mittel für das Pressen des Verpackungsmaterials (10, 11) zum Zeitpunkt des Versiegelns, um zu verhindern, daß geschmolzener Kunststoff über den Versiegelungsbereich hinaus nach außen zu dem flüssigen Nahrungsmittel hin fließt, wobei diese Mittel an dem Siegelblock (19) einen bezüglich der Vorderseite erhabenen Teil (19a, 19b) aufweisen, der Anpreßteil (71, 72) von dem erhabenen Teil (19a, 19b) des Siegelblocks (19) beabstandet ist, der erhabene Teil (19a, 19b) des Siegelblocks (19) von dem Induktor beabstandet ist und sich an einer Außenseite des Induktors (31, 32) befindet,
wobei die Vorderseite des Gegenelements angeordnet ist, um das Verpackungsmaterial gegen den ersten Anpreßteil (71, 72) des Induktors (31, 32) und den erhabenen Teil (19a, 19b) des Siegelblocks (19) zu drücken, wobei sich der erhabene Teil des Siegelblocks dort befindet, um zu verhindern, daß zum Zeitpunkt des Versiegelns geschmolzener Kunststoff über den Versiegelungsbereich (S) hinaus nach außen zu dem flüssigen Nahrungsmittel hin fließt.

15. Versiegelungsvorrichtung nach Anspruch 14, bei der der Induktor ein erster Induktor (31) ist, die weiterhin einen bezüglich einer Transportrichtung des Verpackungsmaterials (10, 11) zwischen dem Siegelblock (19) und dem Gegenelement (76, 77) hinter dem ersten Induktor liegenden zweiten Induktor (32) umfaßt, wobei der erhabene Teil (19a) des Siegelblocks (19) bezüglich dieser Transportrichtung vor dem Anpreßteil (71) des ersten Induktors (31) liegt.

16. Versiegelungsvorrichtung nach Anspruch 15, bei der der zweite Induktor (32) einen Anpreßteil (72) und der Siegelblock (19) einen weiteren erhabenen Teil (19b) aufweist, wobei sich der Anpreßteil (72) des zweiten Induktors (32) bezüglich der Transportrichtung des Verpackungsmaterials (10, 11) vor dem weiteren erhabenen Teil (19b) befindet.

17. Versiegelungsvorrichtung nach Anspruch 14, die weiterhin eine Spannungsanlegeeinrichtung (81, 82) zum Anlegen einer hochfrequenten Spannung an den Induktor (31, 32) umfaßt.

18. Versiegelungsvorrichtung nach Anspruch 14, bei der sich der Induktor (31, 32) zwischen dem erhabenen Teil (19a, 19b) des Siegelblocks (19) und einer für das Aufnehmen einer Schneidvorrichtung (21) in dem Siegelblock (19) ausgebildeten Nut (38) befindet.

## Revendications

1. Dispositif de scellement (14,15) pour produire une zone de scellement (S) dans un matériau d'emballage (10,11) comportant une couche de plastique (56) et contenant un produit alimentaire liquide, comprenant :
une barre de découpage (18) ;
un bloc de scellement (19) présentant une surface frontale ;
au moins une bobine d'induction (31,32) intégrée audit bloc de scellement (19), ladite bobine d'induction étant partiellement exposée sur la surface frontale dudit bloc de scellement, ladite bobine d'induction (31,32) étant pourvue d'une première portion de pressage (71,72) qui saille de ladite partie exposée de ladite bobine d'induction (31,32) pour presser le matériau d'emballage (10,11) pendant une opération de scellement ;
un moyen applicateur de tension (81,82) pour appliquer une tension à haute fréquence à ladite bobine d'induction (31,32) ;
un chanfrein (76,77) disposé en relation opposée par rapport à ladite bobine d'induction(31,32), ledit chanfrein (76,77) présentant une surface frontale afin de permettre le maintien du matériau d'emballage (10,11) entre ladite surface frontale dudit chanfrein (76,77) et ladite surface frontale dudit bloc de scellement (19) ;
ladite barre de découpage (18) comportant une surface frontale qui fait face à ladite surface frontale dudit bloc de scellement (19), ladite barre de découpage (18) comportant un évidement situé dans ladite surface frontale de ladite barre de découpage, ledit évidement étant ouvert sur ladite surface frontale de ladite barre de découpage (18) et recevant ledit chanfrein (76,77); et
un moyen pour presser le matériau d'emballage (10,11) au moment du scellement afin d'empêcher le plastique fondu de s'écouler vers l'extérieur au-delà de la zone de scellement dans la direction de l'aliment liquide, ledit moyen incluant une extension (76b, 77b) dudit chanfrein (76,77), ladite extension (76b, 77b) possédant une surface qui fait face à ladite surface frontale de ladite barre de découpage (18) avant la production de la zone de scellement (S) par le dispositif de scellement , ladite extension (76b, 77b) dudit chanfrein (76,77) s'étendant le long de la surface frontale de ladite barre de découpage (18) et s'étendant vers l'extérieur au-delà de l'évidement qui s'ouvre sur ladite surface frontale de ladite barre de découpage (18), ledit moyen incluant en outre une protubérance (73b, 74b) prévue dans ledit évidement et présentant une surface (S3) orientée obliquement et s'éloignant dudit aliment liquide et supportant ladite extension (76b, 77b) dans la direction de ladite première portion de pressage (71,72) afin de constituer une deuxième portion de pressage qui est disposée à une position correspondant à une portion du matériau d'emballage (10,11) qui est plus proche de l'aliment liquide que de la zone de scellement (S).

2. Dispositif de scellement selon la revendication 1, dans lequel ladite barre de découpage (18) inclut une paire de rails de découpage (73,74), qui sont chacun pourvus d'un chanfrein (76,77).

3. Dispositif de scellement selon la revendication 2, dans lequel chaque rail de découpage (73,74) inclut une première portion de support (73a, 74b) et une seconde portion de support (73b, 74b) qui maintiennent en place le chanfrein (76,77) respectif sur le rail de découpage (73,74).

4. Dispositif de scellement selon la revendication 3, dans lequel ladite seconde portion de support (73b, 74b) est ladite projection définie par une paire de surfaces orientées obliquement (S2, S3).

5. Dispositif de scellement selon la revendication 4, dans lequel chacun desdits chanfreins (76,77) inclut une portion d'engagement-arrêt (76a, 77a) qui engage ladite protubérance sur le rail de découpage respectif (73,74).

6. Dispositif de scellement selon la revendication 2, dans lequel lesdits rails de découpage (73,74) sont espacés les uns des autres et sont prévus sur ladite barre de découpage (18) et incluent une rainure (38) positionnée entre lesdits rails de découpage (73,74) dans laquelle une découpeuse (21) se déplace afin de découper la zone de scellement (S).

7. Dispositif de scellement selon la revendication 1, dans lequel une première et une seconde bobine d'induction (31,32) sont intégrées audit bloc de scellement (19) et ladite barre de découpage (18) inclut un premier et un second évidement pour recevoir un premier et un second chanfrein (76,77) disposés en relation opposée par rapport à la bobine d'induction (31,32) respective, chacun desdits chanfreins (76,77) possédant ladite extension (76b, 77b), l'extension (76b) dudit premier chanfrein (76) s'étendant dans la direction qui s'éloigne de ladite deuxième bobine d'induction (32) et l'extension (77b) dudit second chanfrein (77) s'étendant dans la direction qui s'éloigne de ladite première bobine d'induction( 31).

8. Dispositif de scellement de l'une quelconque des revendications 1 à 7, dans lequel ladite surface frontale dudit bloc de scellement (19) inclut une portion saillante (19a, 19b)qui est située parallèlement auxdites bobines d'induction (31,32) et en opposition par rapport à ladite extension (76b, 77b) dudit chanfrein (76,77).

9. Dispositif de scellement pour produire une zone de scellement dans un matériau d'emballage comportant une couche de plastique et contenant un produit alimentaire liquide, comprenant :
un bloc de scellement (19) présentant une surface frontale ;
au moins une bobine d'induction (131,132) intégrée audit bloc de scellement (19), ladite bobine d'induction étant partiellement exposée sur la surface frontale dudit bloc de scellement, ladite bobine d'induction (131,132) étant pourvue d'une première portion de pressage (71,72) qui saille de ladite partie exposée de ladite bobine d'induction (131,132) pour presser le matériau d'emballage (10,11) pendant une opération de scellement ;
une barre de découpage (18) présentant une rainure pour recevoir une découpeuse (21) qui découpe ledit matériau d'emballage, ladite barre de découpage (18) comportant un chanfrein (76,77) disposé en opposition par rapport à ladite bobine d'induction (131,132), ledit chanfrein (76,77) présentant une surface frontale pour presser le matériau d'emballage (10,11) contre ladite surface frontale dudit bloc de scellement (19) et possédant un bord extérieur ;
un moyen d'application de tension (81,82) pour appliquer une tension à haute fréquence auxdites bobines d'induction (131,132) ; et
un moyen pour presser le matériau d'emballage (10,11) au moment du scellement afin d'empêcher le plastique fondu de s'écouler vers l'extérieur au delà de la zone de scellement dans la direction de l'aliment liquide, ledit moyen incluant une bobine d'induction (131,132) ayant généralement une section transversale de forme elliptique avec son côté le plus petit formant la partie exposée de ladite bobine d'induction (131,132), dans lequel une distance (L2) entre la portion de pressage (71,72) de la bobine d'induction (131,132) et le bord extérieur du chanfrein (76,77) tel que mesurée le long de la surface frontale du bloc de scellement (19) est supérieure à une distance L1 entre la portion de pressage (71,72) de la bobine d'induction(131,132) et la rainure telle que mesurée le long de la surface frontale du bloc de scellement (19).

10. Dispositif de production d'une zone de scellement (S) dans un matériau d'emballage tubulaire, consistant à :
positionner le matériau d'emballage tubulaire (10, 11) composé d'une couche de plastique extérieure (56) et d'une couche adjacente en feuille d'aluminium (55) et contenant le liquide entre une barre de découpage (18) et un bloc de scellement (19), le bloc de scellement (19) incluant au moins une bobine d'induction (31,32) intégrée au bloc de scellement (19), une portion de la bobine d'induction (31,32) étant exposée sur une surface frontale du bloc de scellement (19), la bobine d'induction (31,32) incluant une première portion de pressage (71,72) s'étendant dans la direction de la barre de découpage (18), la barre de découpage (18) incluant au moins un chanfrein (76,77) positionné en opposition par rapport à la bobine d'induction (31,32), la barre de découpage (18) présentant une surface frontale qui fait face à la surface frontale du bloc de scellement (19), la barre de découpage comportant au moins un évidement situé dans la surface frontale de la barre de découpage, au moins un évidement recevant au moins un chanfrein (76,77), une protubérance (73b, 74b) étant prévue dans ledit évidement et présentant une surface (S3)orientée obliquement et qui s'éloigne dudit aliment liquide, une portion (76b, 77b) du chanfrein étant située à l'extérieur d'au moins un évidement et supportée par ladite surface (S3) orientée obliquement et présentant une surface arrière qui fait face à la surface frontale de la barre de découpage (18) avant la production de la zone de scellement (S) dans le matériau d'emballage tubulaire, ladite portion (76b, 77b) du chanfrein comportant ladite surface arrière s'étendant au-delà de l'évidement le long de la surface frontale de la barre de découpage (18) et dans une direction qui s'éloigne d'une zone de découpage où le matériau d'emballage est découpé, le chanfrein présentant une surface frontale ;
presser le matériau d'emballage tubulaire (10,11) entre la surface frontale du bloc de scellement (19) et la surface frontale du chanfrein (76,77) afin d'approcher les portions opposées d'une couche de plastique et de déformer une portion du matériau d'emballage tubulaire le long d'une zone de scellement disposée à un emplacement correspondant à la première portion de pressage ;
appliquer une tension à haute fréquence à la bobine d'induction (31,32) afin de générer de la chaleur dans la couche en feuille d'aluminium (55) et de fondre la couche de plastique adjacente (56) de telle sorte que les portions opposées de la couche de plastique (56) du matériau d'emballage tubulaire soient liées les unes aux autres par fusion à chaud dans la zone de scellement (S); et
presser les unes contré les autres des portions du matériau d'emballage (10,11) situées plus près du liquide que de la zone de scellement avec la portion (76b, 77b) du chanfrein (76,77) présentant ladite surface arrière supportée par ladite surface oblique afin d'induire une portion de la force de pressage dirigée dans la direction de ladite première portion de pressage de manière à empêcher le plastique fondu de s'écouler vers l'extérieur de la zone de scellement dans la direction du liquide.

11. Procédé selon la revendication 10, dans lequel ladite étape de pressage des portions du matériau d'emballage (10,11) situées plus près du liquide que de la zone de scellement est effectuée pendant l'application d'une tension à haute fréquence aux bobines d'induction (31,32).

12. Procédé selon la revendication 11, dans lequel le bloc de scellement (19) inclut une paire de bobines d'induction (31,32) espacées l'une de l'autre intégrées à la barre de scellement et la barre de découpage (18)inclut une paire de chanfreins (76,77) positionnés chacun en relation opposée par rapport à une des bobines d'induction (31,32) et dans lequel le matériau d'emballage tubulaire est pressé entre la barre de découpage (18) et la barre de scellement (19) afin d'approcher des portions opposées de la couche de plastique et de déformer le matériau d'emballage tubulaire (10,11) à deux emplacements espacés l'un de l'autre correspondant à la portion de pressage (71,72) de chaque bobine d'induction (31,32).

13. Procédé selon la revendication 10, dans lequel ladite étape de pressage des portions du matériau d'emballage (10,11) situées plus près du liquide que de la zone de scellement est effectuée par les secondes portions de pressage saillantes (19a,19b) prévues sur le bloc de scellement(19).

14. Dispositif de scellement (14,15) pour produire une zone de scellement (S) dans un matériau d'emballage (10,11) comportant une couche de plastique (56) et contenant un produit alimentaire liquide, comprenant :
un bloc de scellement (19) présentant une surface frontale ;
au moins une bobine d'induction (31,32) intégrée dans ledit bloc de scellement (19), ladite bobine d'induction étant partiellement exposée sur la surface frontale dudit bloc de scellement, ladite bobine d'induction (31,32) étant pourvue d'une première portion de pressage (71,72) qui saille de ladite partie exposée de ladite bobine d'induction (31,32) pour presser le matériau d'emballage (10,11) pendant une opération de scellement ;
un chanfrein (76,77) situé en relation opposée par rapport à la bobine d'induction (31,32) et présentant une surface frontale, et un moyen pour presser le matériau d'emballage (10,11) au moment du scellement afin d'empêcher le plastique fondu de s'écouler vers l'extérieur au-delà de la zone de scellement dans la direction de l'aliment liquide, ledit moyen incluant une portion saillante (19a,19b) sur ledit bloc de scellement (19) qui forme une saillie par rapport à ladite surface frontale, ladite portion de pressage (71,72) étant espacée de ladite portion saillante (19a,19b) dudit bloc de scellement (19) et ladite portion saillante (19a,19b) du bloc de scellement (19) étant espacée des bobines d'induction et située sur un côté externe des bobines d'induction (31,32);
dans lequel la surface frontale du chanfrein est agencée de manière à presser le matériau d'emballage contre la première portion de pressage (71,72) des bobines d'induction (31,32) et la portion saillante (19a, 19b) du bloc de scellement (19), ladite portion saillante dudit bloc de scellement étant située de manière à empêcher le plastique fondu de s'écouler vers l'extérieur au-delà de la zone de scellement (S) dans la direction de l'aliment liquide au moment du scellement.

15. Dispositif de scellement selon la revendication 14, dans lequel l'unité d'induction comprend une première bobine d'induction (31) ainsi qu'une seconde bobine d'induction (32) située en aval de la première bobine d'induction relativement à une direction de transport du matériau d'emballage (10,11) entre le bloc de scellement (19) et le chanfrein (76,77), la portion saillante (19a) du bloc de scellement (19) étant située en amont de ladite portion de pressage (71) de ladite première bobine d'induction (31) relativement à ladite position de transport.

16. Dispositif de scellement selon la revendication 15, dans lequel la seconde bobine d'induction (32) inclut une portion de pressage (72) et le bloc de scellement (19) inclut une autre portion saillante (19b), la portion de pressage (72) de la seconde bobine d'induction (32) étant située en amont de ladite autre portion saillante (19b) relativement à la direction de transport du matériau d'emballage (10,11).

17. Dispositif de scellement selon la revendication 14, comprenant en outre un dispositif applicateur de tension (81,82) pour appliquer une tension à haute fréquence aux bobines d'induction (31,32).

18. Dispositif de scellement selon la revendication 14, dans lequel les bobines d'induction (31,32) sont situées entre la portion saillante (19a,19b) du bloc de scellement (19) et une rainure (38) formée dans ledit bloc de scellement (19) afin de recevoir une découpeuse (21).
